# EUROPEAN PATENT APPLICATION

(11) **EP 0 578 587 A2**
(43) Date of publication of application: **12.01.1994**
(21) Application number: 93420281.3
(22) Date of filing: 29.06.1993
(51) Int. Cl.: G11B 5/23, G11B 5/187, G11B 5/245, G11B 5/147

(54) **Narrow track width laminated core magnetic head**

(30) Priority: 07.07.1992 US 909857
(71) Applicant: EASTMAN KODAK COMPANY, Rochester, New York 14650-2201 (US)
(72) Inventor: Jagielinski, Tomasz M., c/o Eastman Kodak Company, Rochester, New York 14650-2201 (US)
(74) Representative: Buff, Michel

(57) **Abstract**

In a narrow track magnetic head, the effective track width is determined by two core segments which abut to form the head gap line. The core segments (16',18') are offset from each other along the gap line (14'), and the resultant head track width is established by the overlap of the core segments (16',18') at the gap. The track width may be precisely set to a fraction of the core segment width by adjustment of the offset between the core segments.

## Description

### BACKGROUND OF THE INVENTION

### FIELD OF THE INVENTION

This invention relates generally to magnetic recording, and in particular, to a laminated core magnetic recording or playback head.

### DESCRIPTION RELATIVE TO THE PRIOR ART

The present trend in digital magnetic recording is toward higher density of recorded data to provide increased magnetic media storage capacity and increased transfer rates of data to and from the magnetic medium. Higher density has been accomplished both by increasing the bit packing of the recorded data and by increasing the density of tracks recorded on the medium. The increase in track density has been implemented by reducing the guard band between tracks, by use of azimuthed recording to allow closer track positioning without increasing cross talk between tracks, and by narrowing the record and playback head track width.

A variety of structures have been proposed to provide magnetic heads having narrow track widths. For example, the following disclose such structures: U.S. Patent 4,115,827 issued in the name of Gooch; U.S. Patent 3,798,758 issued in the names of Stamers et al; and U.S. Patent 3,922,776 issued in the names of Alger et al. It is noteworthy that each of these patents discloses heads having magnetic paths of uniform cross sectional area throughout the entire magnetic structures of the heads and that narrow track widths are obtained in each of these structures by controlling the magnetic path cross sectional area throughout the entire magnetic structure of the head.

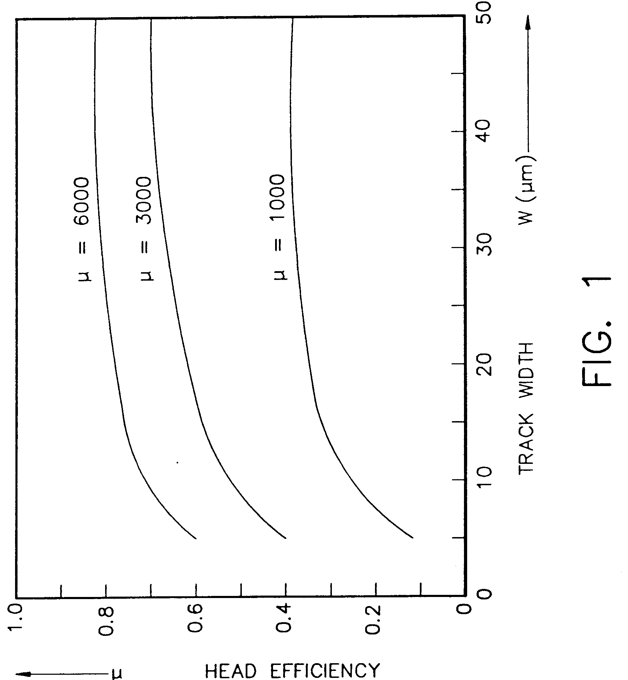

It is known in the art that as the track width is narrowed, the efficiency of the head decreases. The reluctance, R, of a magnetic circuit is expressed by R=1/µA, where 1 is the length of the circuit, µ is the permeability of the magnetic material, and A is the cross sectional area of the circuit. As the track width is narrowed, the cross sectional area A of the magnetic structure of the head writing or reading the track correspondingly decreases, and the head's magnetic reluctance increases. The increase in reluctance means that less flux is confined to the core of the head as required for improved head efficiency, and the flux appears as non-signal generating leakage flux that does not thread the winding of the head. Figure 1 shows the dependence of head efficiency on track width. As shown, for track widths of less than 5 microns, it is impossible to realize head efficiencies equal to 60% even with magnetic materials having permeabilities as great as 6000.

The use of laminated cores in magnetic heads is known in the art as a means for increasing head efficiency. The laminated core structure interferes with induced eddy current flow which in turn opposes the signal field flux. The eddy current losses become increasingly detrimental to head efficiency with increasing frequency, and use of a laminated core is essential for efficient head operation in the megahertz frequency range. A prior art laminated core, narrow track, video recording head is described in the paper "Soft Magnetic Layers for Video Recording Heads", by F.W.A. Dirne et al, Transactions on Magnetics, Intermag Conference, Nov. 1991, Part II, p. 4882.

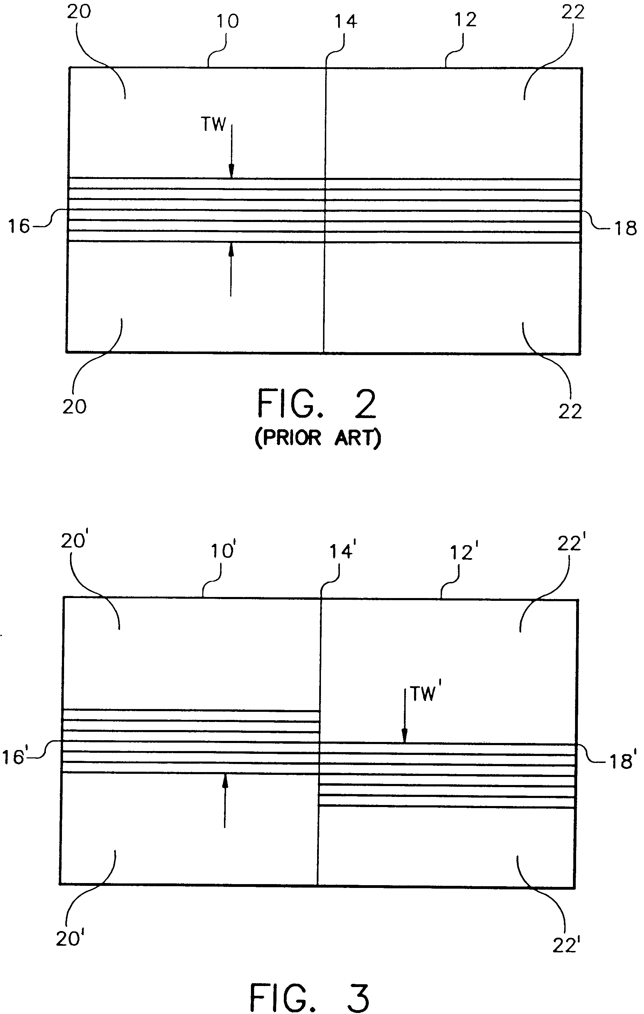

Referring to Fig. 2, a conventional laminated head as disclosed in the prior art comprises two sections 10,12 abutted at the gap line 14. Each section 10,12 contains laminated core segments 16,18 which are clad by non-magnetic supports 20,22. The core segments 16,18 are aligned face-to-face at the gap line 14 so that the track width, TW is determined by the widths of the laminated segments 16,18.

### SUMMARY OF THE INVENTION

To obtain a narrow track magnetic head, the present invention teaches forming a head from two abutting core segments that are offset from each other along their line of abutment at the head gap. This configuration differs from the prior art which discloses the attainment of narrow track width by progressively decreasing the width of the head core.

### BRIEF DESCRIPTION OF THE DRAWINGS

The invention, as well as the prior art, will be described with reference to the drawings.
Fig. 1 is a plot of head efficiency as a function of track width,
Fig. 2 is a drawing of a laminated head of the prior art,
Fig. 3 is a drawing of a laminated head in accordance with the teaching of the invention.
Fig. 4 is a perspective drawing of an azimuthed gap head in accordance with the teaching of the invention.

### DESCRIPTION OF THE PREFERRED EMBODIMENT

Figure 3 shows the head according to the present invention. Such head comprises two sections 10',12' abutted at the gap line 14'. (In Figure 3, elements comparable to elements in the conventional laminated head shown in Figure 2 have the same reference numbers, albeit the corresponding elements' reference numbers are primed.) The width of the laminated core segment 16' is equal to that of the laminated core 18' (although it need not be), and the core segments 16',18' are contained between cladding supports 20',22' respectively. The laminated core segment 16' is offset from the laminated core segment 18' along the gap line 14', and the resultant head track width TW' is established by the overlap of the laminated segments 16',18' at the gap line 14'. It will be noted that the track width TW' can be precisely set to a fraction of the laminated segment widths 16,18'. The widths of the core segment 16',18' provide sufficient cross sectional area for relatively low reluctance along their lengths. The combination of sufficient cross sectional area and narrow offset results in a narrow track, efficient head having a precisely controlled track width.

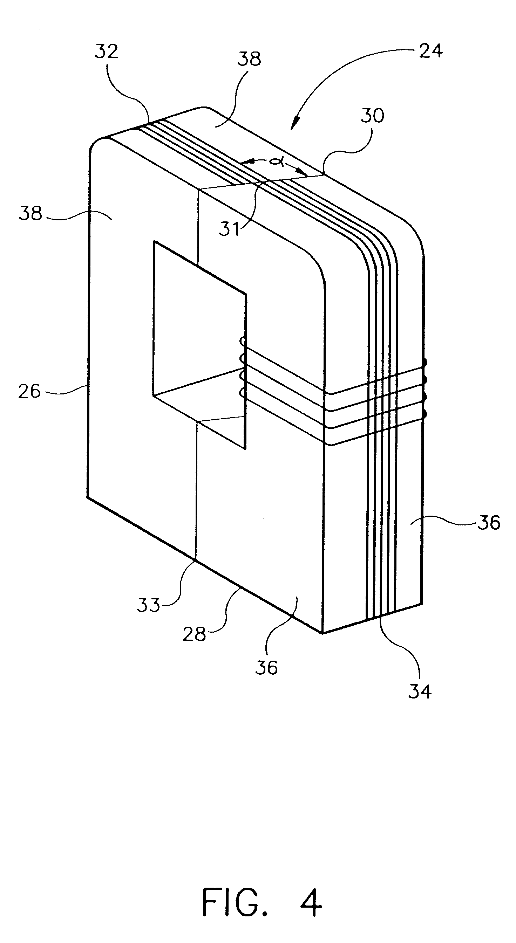

Referring to Fig. 4, a narrow track width head 24 comprises half sections 26,28 abutted together along the gap line 30. The half sections 26,28 consist of laminated core segments 32,34 supported by ceramic cladding elements 36,38. The core segments 32, 34 are built from 1.8-2.0 micron magnetic laminations separated by 1000 angstrom layers of electrical insulating material (such as SiO₂₎ for a core segment 32,34 thickness of 20 microns. In the preferred embodiment, the head has an azimuthed gap line 30, where the planes of the laminations comprising the core segments 32,34 are slanted with respect to the direction of the gap line 30. Azimuthed gap line heads allow reduction of the guard bands between adjacent tracks, thereby allowing increased packing density of the recorded information. A head track width having a physical width of 2 microns was established by displacement of the core segment 32 relative to the core segment 34 along the gap line 30 so that the overlap of the segments 32,34 at the gap line was 2 microns. The magnetic track width of the track recorded by the head 24 on a magnetic medium was measured by means of a Bitter pattern at 2.8 microns. The efficiency of the head was greater than 60% with this track width.

It will be noted that an essentially continuous magnetic circuit is formed by the overlapping lamination segments which form the narrow track and the remainder of the core segments 32, 34. Within this magnetic circuit there are two gaps: the front or signal gap 31; and the back gap formed along the line 33 where the two half sections 26,28 meet, thereby resulting in a back gap abutment between the core segments 32,34. As is the practice in the head art, the reluctance of the back gap is made as small as possible by minimizing the length (or size) of the gap. In the head which is the subject of the present invention, the flux traversing the magnetic circuit "funnels" down from the cross sections of the core segments 32,34 to cross the back gap. As previously stated, the reluctance of the core segments 32,34 is decreased by the comparatively large cross sectional areas of the segments 32,34 with the result that the dominant reluctance in the magnetic circuit is at the front signal gap 31, as required for efficient head performance.

As seen in Fig. 4, the offset of the core segments 32,34 causes an angle α to be formed between one edge of the core track and the extended gap line, such angle α being measured in the direction such that no magnetic segment is included within the angle. In the preferred embodiment, the angle α is obtuse. This provides for more efficient head performance and clearer definition of the track width. The alternate configuration, where the angle α is acute, is also a usable configuration. Also in the preferred embodiment, the head half sections are in the form of "C" cores. It will be understood that one of the half sections may be in the form of a "C" core, while its matching core section may be in the form of an "I" bar.

The invention has been described in detail with particular reference to preferred embodiments thereof, but it will be understood that variations and modifications can be effected within the spirit and scope of the invention. For example, the invention has been described in terms of a head having a laminated core, but it is clear that the teaching of the invention may be applied to establish a narrow track in a head having a homogeneous, non-laminated magnetic core structure.

## Claims

1. A magnetic head comprising:
a) a first head section (10', 26) having a substantially planar magnetic core segment (16', 32) of a first width,
b) a second head section (12', 28) having a substantially planar magnetic core segment (18', 34) of a second width, and
c) means for positioning said first head section against said second head section to form a gap line (14', 30) of said magnetic head, characterized in that said first head section (10', 26) is partially offset from said second head section (12', 28) along said gap line (14', 30) wherein a portion of said magnetic core segment (16', 32) of said first head section (10', 26) overlaps a portion of said magnetic core segment (18', 34) of said second head section (12', 28) along said gap line (14', 30), whereby the effective track width (TW') of said magnetic head equals the common width of said overlapping portions of said magnetic core segments of said first and said second head sections at said gap line.

2. The magnetic head of Claim 1, wherein the magnetic core segment (16', 32) of said first section (10', 26) and the magnetic core segment (18', 34) of said second section (12', 28) are laminated core segments.

3. The magnetic head of Claim 1, wherein the width of the magnetic core segment (16', 32) of said first section (10', 26) equals the width of the magnetic core segment (18', 34) of said second section (12', 28).

4. The magnetic head of Claim 1, wherein said magnetic head is an azimuthed gap magnetic head.

5. The magnetic head of Claim 4, wherein the angle (α) formed by one edge of the track of said head and by the line coextensive with said gap line (30), and wherein no magnetic core segment of said head is included within said angle, is obtuse.

6. A magnetic head comprising:
a) a magnetic circuit formed of two portions separated by a gap line and having a substantially constant cross section; and
b) a signal gap in said magnetic circuit, characterized in that the portion of said magnetic circuit on one side of said signal gap is displaced along the line of said gap from the portion of said magnetic circuit on the other side of said signal gap and wherein a fractional part of said cross section of said magnetic circuit across said gap is in an opposing facial relationship, whereby said fractional part determines the track width (TW') of said magnetic head.

7. The magnetic head of Claim 6, wherein said magnetic circuit is a laminated magnetic circuit.

8. The magnetic head of Claim 6, wherein said magnetic head is an azimuthed gap head.

9. The magnetic head of Claim 8, wherein the angle (α) formed by one edge of the track of said head and by the line coextensive with said gap line, and wherein no magnetic core segment of said head is included within said angle, is obtuse.

10. A method of manufacturing a magnetic head, said method comprising the steps of:
a) forming a first head section (10', 26) having a substantially planar magnetic core segment (16', 32) of a first width;
b) forming a second head section (12', 28) having a substantially planar magnetic core segment (18', 34) of a second width;
c) positioning said first head section (10', 26) against said second head section (12', 28) to form a gap line (14', 30) of said magnetic head, and
d) partially offsetting said first head section (10', 26) from said second head section (12', 28) along said gap line (14', 30) wherein a portion of said magnetic core segment (16', 32) of said first head section (10', 26) overlaps a portion of said magnetic core segment (18', 34) of said second head section (12', 28) along said gap line (14', 30), whereby the effective track width of said magnetic head equals the common width (TW') of said overlapping portions of said magnetic core segments of said first and said second head sections at said gap line (14', 30).
